Europäisches Patentamt

European Patent Office

Office européen des brevets

(19)

(11) Veröffentlichungsnummer: **0 000 540**
**B1**

(12) **EUROPÄISCHE PATENTSCHRIFT**

(21) Anmeldenummer: **78100434.6**

(22) Anmeldetag: **19.07.78**

(51) Int. Cl.³: **C 08 L 77/00,** C 08 K 3/02,
C 08 K 9/10

(54) Flammfeste Polyamidformmassen.

(30) Priorität: **28.07.77 DE 2734103**
**07.12.77 DE 2754491**

(43) Veröffentlichungstag der Anmeldung:
**07.02.79 Patentblatt 79/3**

(45) Bekanntmachung des Hinweises auf die Patenterteilung:
**11.02.81 Patentblatt 81/6**

(84) Benannte Vertragsstaaten:
**BE DE FR GB NL SE**

(56) Entgegenhaltungen:
**DE - B - 2 625 673**
**DE - B - 2 625 691**
**FR - A - 2 274 655**
**FR - A - 2 332 306**
**FR - A - 2 367 100**

(73) Patentinhaber: **BAYER AG**
**Zentralbereich Patente, Marken und Lizenzen**
**D-5090 Leverkusen 1, Bayerwerk (DE)**

(72) Erfinder: **Tacke, Peter, Dr.**
**Brandenburger Strasse 12**
**D-4150 Krefeld (DE)**
(72) Erfinder: **Neuray, Dieter, Dr.**
**Buschstrasse 149**
**D-4150 Krefeld (DE)**
(72) Erfinder: **Michael, Dietrich, Dr.**
**Deswatinesstrasse 57**
**D-4150 Krefeld (DE)**

Courier Press, Leamington Spa, England.

# 0 000 540

## Flammfeste Polyamidformmassen

Die vorliegende Erfindung betrifft flammfeste, vorzugweise verstärkte und/oder gefüllte Polyamidformmassen, die als Brandschutzmittel eine Kombination aus pulverisiertem rotem Phosphor und Phenol-Aldehyd-Harz enthalten.

Aus zahlreichen Patentschriften, u.a. der DAS 1 931 387, ist bekannt, daß roter Phosphor ein sehr wirksames Brandschutzmittel für glasfaserverstärkte Polyamide darstellt, während es bei unverstärkten Polyamiden keine Brandschutzwirkung besitzt bzw. das Abbrennen sogar beschleunigt.

Die Verwendung des roten Phosphors als Brandschutzmittel für Polyamidformmassen ist jedoch mit folgenden, schwerwiegenden Nachteilen verbunden:

1. Bei den üblichen hohen Verarbeitungstemperaturen (über 250°C) der technisch wichtigstem aliphatischen Polyamide (PA—6 und —6,6) bilden sich sehr giftige und übel riechende Phosphor-Wasserstoff-Verbindungen.
2. Der staubfein gemahlene rote Phosphor neigt an der Luft bei Berührung mit heißen Metallflächen, wie sie bei der Einarbeitung des Phosphors in das Polyamid in den üblichen Verarbeitungsmaschinen immer anzutreffen sind, zu Staubexplosionen.
3. Wegen der roten Eigenfarbe des Phosphors und den zur Herstellung von flammfesten Polyamidformmassen notwendigen hohen Konzentrationen an rotem Phosphor wird die Herstellung von brandgeschützten Formmassen in hellen Farben erschwert oder sogar verhindert.

Zur Behebung dieser Nachteile sind zahlreiche Versuche unternommen worden:

Gemäß der DE—OS 2 308 104 können den mit rotem Phosphor brandwidrig ausgerüsteten Thermoplasten zur Verringerung der $PH_3$-Bildung Schwermetallverbindungen, z.B. $MoS_2$, $HgO$, $PbO_2$, $CuO$ zugesetzt werden. Diese Metallverbindungen sind jedoch zumeist giftig und dunkel gefärbt.

Staubexplosionen werden vermieden, indem man den feinteiligen Phosphor in Form von Konzentraten, beispielsweise als Caprolactam-Konzentrate, wie in der DAS 1 965 635 beschrieben, einsetzt oder ihn mit Kunstharzen umhüllt bzw. beschichtet. Methoden zur Umhüllung findet man in den DE—OS 2 408 488 und 2 428 758.

Die Verwendung eines Phosphor-Konzentrates in Caprolactam ist jedoch mit erhöhtem Aufwand verbunden, da das Caprolactam wegen Verschlechterung des Brandverhaltens und Reduzierung der mechanischen Eigenschaften nach Einarbeitung des Konzentrates aus den Formmassen in Entgasungsextrudern wieder entfernt werden muß. — Die in DE—OS 2 408 488 und 2 428 758 beschriebenen Umhüllungen des Phosphors sind ebenfalls sehr aufwendig und im technischen Maßstab schwierig zu realisieren.

Gemäß den DE—AS 2 625 673 und 2 625 691 wird versucht, die $PH_3$-Entwicklung durch Umhüllung des roten Phosphors mit Phenol-Aldehyd-Polykondensaten zu verhindern. Mit der bekannten Flammschutzmittelkombination, die überwiegend aus rotem Phosphor besteht, gelingt es aber nicht — wegen der intensiven Eigenfärbung des Phosphors — helle Polyamidformmassen mit ausreichender Flammfestigkeit herzustellen. Setzt man nämlich diese bekannte Flammschutzmittel-Kombination zum Flammfestmachen von Polyamiden ein — wie es in den Vergleichsbeispielen 5 und 6 der vorliegenden Anmeldung getan wurde — so findet man, daß keine ausreichende Flammfestigkeit erzielt wird, wenn die Flammschutzmittel-Kombination in solchen Mengen (2 Gew.-% roter Phosphor) zugegeben wird, daß die rote Farbe des Phosphors ohne nennenswerte Beeintrachtigung der mechanischen Eigenschaften des Polyamids überdeckt werden kann. Zur Erzielung einer ausreichenden Flammfestigkeit gemäß dem Stande der Technik sind offenbar größere Mengen der bekannten Kombination notwendig, die aber ein Überdekken der roten Farbe des Phosphors nicht mehr möglich machen.

Beispielsweise erfordert die überdeckung der roten Farbe des Phosphors die 2- bis 5-fache Gewichtsmenge von handelsüblichen $TiO_2$-Pigmenten oder die 6- bis 10-fache Gewichtsmenge ZnS.

$TiO_2$-Gehalte von 15—30 Gew.-% setzen die zähelastischen Eigenschaften der Formmassen jedoch so weit herab, daß sie für den technischen Einsatz nicht mehr verwendet werden können.

Überraschenderweise wurde nun gefunden, daß man helle Polyamidformmassen mit der dem Stand der Technik entsprechenden Flammfestigkeit herstellen kann, wenn man vergleichbare Mengen einer Flammschutzmittelkombination, bestehend aus einer Mischung von rotem Phosphor mit einem Überschuß Phenol-Aldehyd-Harz, vorzugsweise einen Novolak, einsetzt. Es war völlig unerwartet, daß ein gleich günstiges Brandverhalten mit $\frac{1}{4}$—$\frac{1}{3}$ der üblichen Phosphormenge erzielt wird, wenn der Phosphor zusammen mit Phenol-Aldehyd-Kondensaten verwendet wird.

Durch die Reduzierung des Phosphorgehaltes wird einer seits die Gefahr der $PH_3$-Bildung weiter herabgesetzt und andererseits die Herstellung farbheller, flammfester Polyamidformmassen ermöglicht. Dem Fachmann ist bekannt, mit welchen Mengen weiterer Pigmente bestimmte Farbtöne eingestellt werden können.

Die starke synergistische Wirksamkeit der Phenol-Aldehyd-Harze als Brandschutzmittel

# 0 000 540

zusammen mit rotem Phosphor ist besonders deshalb übnerraschend, weil diese Harz selbst leicht brennbare Substanzen darstellen, die erst durch Zusatz von Brandschutzmitteln brandwidrig eingestellt werden können.

Gegenstand der Erfindung sind daher Polyamidformmassen, die 0,5—25 Gew.-%, vorzugsweise 3—12, bezogen auf die gesamte Formmasse, einer flammwidrigmachenden Mischung aus rotem Phosphor einer mittleren Teilchengröße <200 μm und einem Phenol-Aldehydharz, sowie gegebenenfalls Verstärkungs- und/oder Füllstoffe enthalten, dadurch gekennzeichnet, daß sie eine Mischung aus

a) 55—95 Gew.-%, vorzugsweise 60—80, Phenol-Aldehyd-Harzen und
b) 5—45 Gew.-%, vorzugsweise 20—40, rotem Phosphor enthalten.

Besonders bevorzugt sind flammfeste Polyamidformmassen, die 10—40 Gew.-%, vorzugsweise 15—35 Gew.-%, bezogen auf die gesamte Formmasse, an Verstärkungs- und/oder Füllstoffen enthalten.

Phenol-Aldehyd-Harze im Sinne der Erfindung sind im Bereich von —30 bis +350°C erweichende, vorzugsweise in saurem Medium kondensierte Harze aus Phenolen und Formaldehyd und/oder Acetaldehyd.

Als phenolartige Verbindungen, aus denen die Harze hergestellt werden können, sind u.a. zu nennen:

Phenol, n- und iso-Alkylphenole mit bis zu 8 C-Atomen in den Seitenketten, Naphthole, Hydroxydiphenyle, Hydroxydiphenylether, Brenzcatechin, Resorcin, Hydrochinon, Bis-(hydroxyphenyl)-alkane und/oder -cycloalkane mit jeweils bis zu 20 C-Atomen, Bis-(hydroxyphenyl)-sulfide, Bis-(hydroxyphenyl)-sulfone, Hydroxybenzoesäuren.

Die Phenol-Aldehyd-Kondensationsharze werden nach bekannten Methoden hergestellt, wie sie beispielsweise in Houben-Weyl, Methoden der organischen Chemie, Band 14/2, 4. Auflage, S. 273 f. beschrieben sind.

Das Molverhältnis Aldehyd zur phenolischen Verbindung liegt in der Regel im Bereich 0,3—1,2, vorzugsweise im Bereich 0,5—0,9. Vorzugsweise werden die durch saure Kondensationen erhaltenen Novolake verwendet.

Zur Erhöhung der Schmelzviskosität kann das Phenol-Aldehyd-Harz vernetzt werden, beispielsweise mit Borsäure, Phosphorsäure, phosphorige Säure, Estern der phosphorigen und Phosphorsäure, mehrwertigen Carbonsäuren, mehrfunktionellen Isocyanaten, mehrfunktionellen Epoxiden oder $PCl_3$. Bis zu 25 Gew.-% Vernetzungsmittel können dem Harz zugesetzt werden. Besonders wirksam ist die Vernetzung mit mehrfunktionellen Epoxiden, Phosphorsäure und Borsäure. Vorzugsweise sollte das Phenol-Aldehyd-Harz eine Mindestschmelzviskosität von 20 Pa.s bei 200°C aufweisen.

Weiterhin kann die Überführung der Phenol-Aldehyd-Harze in Metallsalze von Vorteil sein, weil dadurch die Wirksamkeit der Brandschutzmittelkombinationen zumeist verbessert wird. Als Metalle zur Salzbildung kommen in Betracht: Alkali-, Erdalkalimetalle, Zink, Cadmium, Zinn, Blei, Antimon, Aluminium, Kupfer, Mangan, Eisen, Kobalt, Nickel. In den Harzen können eines oder mehrere der Metalle enthalten sein. Die Metallsalze können beispielsweise aus den Phenol-Aldehyd-Harzen und den Oxiden, Hydroxiden, Carbonaten, Acetaten, Formiaten, Phosphaten, Boraten der Metalle hergestellt werden. Bis zu 15 Gew.-% dieser Metallverbindungen, vorzugsweise der Oxide können den Harzen zugesetzt werden.

Die Phenol-Aldehyd-Harze können auch auf die Polyamid-Komponente der erfindungsgemäßen Formmassen gepfropft werden, wenn beispielsweise das Vernetzungsagens (beispielsweise ein Diepoxid) mit dem Harz noch nicht oder noch nicht vollständig reagiert hat und daher bei der Einarbeitung der Brandschutzmittel in die Polyamide noch mit dem Polyamid reagieren kann.

Als Polyamide für die erfindungsgemäßen Formmassen können eingesetzt werden: PA—6, PA—6,6, deren Gemische, Blockpolyamide und Copolymere aus ε-Caprolactam, Adipinsäure, Hexamethylendiamin, weiterhin PA—11 und PA—12 und Polyamide, die aus aliphatischen Diaminen und Adipinsäure und/oder Isophthalsäure und/oder Terephthalsäure und/oder Sebacinsäure und/oder Azelainsäure und/oder Cyclohexandicarbonsäure aufgebaut sind.

Als aliphatische Diamine sind außer Hexamethylendiamin, 2,2,4- und 2,4,4-Trimethyl-hexamethylendiamin, Isophorondiamin, 1,3- und 1,4-Bis-aminocyclohexan, Bis-aminocyclohexyl-alkane und Xylylendiamine zu nennen.

Außerdem kommen Polyamide in Betracht, die aus den genannten aliphatischen Dicarbonsäuren und aromatischen Diaminen wie z.B. m- und p-Phenylendiamin hergestellt werden, sowie Polyamidgemische und Copolyamide aus allen genannten Komponenten, soweit aliphatische und teilaliphatische Polyamide entstehen. Bevorzugte Polyamide sind aliphatische Polyamide, insbesondere PA—6 und PA—6,6.

Der mittlere Durchmesser der Phosphor-Teilchen in den Konsentraten ist <200 μm, vorzugsweise <100 μm, besonders bevorzugt <20 μm. Als Phosphor für die erfindungsgemäßen Brandschutzmittelmischung kommen alle handelsüblichen, farbigen allotropen Formen des roten Phosphors in Betracht.

Zur Herstellung der Flammschutzmittelmischung bzw. eines Konzentrates kann der gepulverte rote Phosphor vorzugsweise in das geschmolzene Harz eingerührt oder eingeknetet werden. Eine

3

# 0 000 540

Verdünnung des Harzes mit Lösungsmitteln während der Herstellung der Konzentrate ist möglich, erfindungsgemäß jedoch nicht erforderlich. Als Apparaturen für die Herstellung der Konzentrate kommen Rührkessel, Kneter aber auch Extruder in Betracht.

Das Harz kann auch in Pulverform mit dem Phosphor gemischt und aus dem Gemisch, gegebenenfalls unter Wärmeeinwirkung, ein Granulat oder Pillen gepreßt werden.

Weiterhin kann das Harz auch in Gegenwart des Phosphors aus seinen Ausgangskomponenten kondensiert werden.

Bei Verwendung der erfindungsgemäßen Brandschutzmittelkombinationen ist die Entwicklung von giftigen Phosphor-Wasserstoff-Verbindungen besonders gering. Die Freisetzung solcher Phosphine läßt sich noch weiter zurückdrängen durch Zugabe kleiner Mengen $MoS_2$, $HgO$, $PbO_2$, $CuO$, $ZnO$.

Die Einarbeitung der erfindungsgemäßen Brandschutzmittelmischungen bzw. -Konzentrate in die Polyamide kann, gegebenenfalls gemeinsam mit Pigmenten und sonstigen Zusätzen, in handelsüblichen Maschinen erfolgen. Bevorzugt sind Einwellen- und Doppelwellenextruder.

Pigmente zur Überdeckung der roten Eigenfarbe des Phosphors und zur Einstellung eines bestimmten Farbtons können entweder neben dem Phosphor in den erfindungsgemäßen Konzentraten enthalten sein oder gleichzeitig mit den erfindungsgemäßen Konzentraten in die Formmassen oder gesondert eingearbeitet werden.

Als Weißpigmente zur Überdeckung der roten Eigenfarbe des Phosphors sind bevorzugt zu nennen: $TiO_2$, $ZnS$, $BaSO_4$. Das 2—10-fache, bevorzugt das 3—5-fache der in den Formmassen enthaltenen Phosphormenge an Weißpigmenten wird verwendet. Dem Fachmann ist bekannt, mit welchen Mengen zusätzlicher Pigmente bestimmte Farbtöne eingestellt werden können.

Von Farbpigmenten, Farbstoffen, Verarbeitungshilfsmitteln und Stabilisatoren, die in den erfindungsgemäßen Formmassen in den üblichen Mengen enthalten sein können, sind u.a. die folgenden zu nennen: Ruß, Cadmiumsulfid, Phthalocyanine, Salze der Stearinsäure, Talkum, sterisch gehinderte Phenole. Als Verstärkungs- und Füllstoffe, die in den erfindungsgemäßen Formmassen enthalten sein können, sind u.a. die folgenden zu nennen: Glas-, Asbestfasern, Glaskugeln, Talkum, Wollastonit, Microvit, Kreide, Quarz, Fasern, insbesondere Glasfasern, sind als Verstärkungsstoffe bevorzugt.

Die erfindungsgemäßen Formmassen können auf handelsübliche Spritzgießmaschinen zu flammfesten Formteilen verarbeitet werden.

Beispiele

Die folgenden Harze wurden nach Houben-Weyl, Methoden der Organischen Chemie, Band 14/2, 4. Auflage, Makromolekulare Stoffe II, S. 273 f. hergestellt:

A. Novolak aus Phenol und Formaldehyd, Erweichungsbereich 113—119°C, Seite 273.

B. Novolak aus p-Phenyl-phenol und Formaldehyd, Erweichungsbereich 87—123°C, Seite 274.

C. Novolak aus p-Kresol und Formaldehyd nach der Vorschrift von Versuch B, statt 945 g p-Phenyl-phenol jedoch 600 g p-Kresol eingesetzt, Erweichungsbereich 78—112°C.

D. Novolak aus Resorcin und Formaldehyd, Erweichungsbereich 98—121°C, Seite 274.

E. Novolak aus Phenol und Acetaldehyd, Erweichungsbereich 117—122°C, Seite 275.

F. Resol aus Phenol und Formaldehyd, bei 20°C hochviskoses Harz, Seite 278.

Zur Herstellung der Mischung I—XIII wurden jeweils 33 Gew.-Teile roter Phosphor in 67 Gew.-Teile geschmolzenes Harz, zur Herstellung der Mischungen Ia—XIIIa wurden jeweils 20 Gew.-Teile roter Phosphor in 80 Gew.-Teilen geschmolzenes Harz eingerührt, das Harz dann gegebenenfalls vernetzt und/oder teilweise in ein Metallsalz übergeführt. — Die Herstellungsbedingungen der Mischungen I—XIII sind in Tabelle 1 zusammengestellt. Die Herstellungsbedingungen der Mischungen Ia—XIIIa sind in Tabelle 2 zusammengestellt.

Nach dem Ausgießen der fertiggestellten Konzentrate auf Bleche, erstarrten sie schnell zu spröden Produkten, die sich leicht auf Korndurchmesser von ca. 2—4 mm zerkleinern ließen.

4

TABELLE 1: Herstellung der Mischungen I—XIII

| | Harz | Harztemp. °C bei Zumischg. von $P_{rot}$ | weitere Zusätze, % von Summe Harz + $P_{rot}$ | Harztemp. bei Zugabe der Zusätze, °C | Gemischtemp. bei Ausgießen aus dem Herstellungsgefäß, °C | |
|---|---|---|---|---|---|---|
| I | A | — | Diepoxid *), 15 | 180 | 230 | Vergleichs- |
| II | A | — | Triäthylphosphat, 3,5 | 150 | 245 | versuche |
| III | A | — | ZnO, 1,3 | 50 | 230 | |
| IV | A | 150 | — | — | 180 | |
| V | A | 150 | Diepoxid *), 3 /ZnCO$_3$, 0,5 | 180 | 250 | |
| VI | A | 150 | Borsaure, 0,5 | 180 | 250 | |
| VII | A | 150 | CaO, 0,6 | 50 | 250 | |
| VIII | B | 165 | FeCO$_3$, 2 | 180 | 250 | |
| IX | C | 140 | Diepoxid *), 3,5 | 170 | 230 | |
| X | C | 140 | H$_3$PO$_4$, 0,3 | 150 | 235 | |
| XI | D | 165 | Diepoxid *), 1,2 | 175 | 250 | |
| XII | E | 170 | Diepoxid *), 1,8 | 190 | 240 | |
| XIII | F | 150 | Toluylendiisocyanat, 1,7 | 180 | 200 | |

*) Diglycidyläther von 2,2-Bis-(4-hydroxyphenyl)-propan (Bisphenol A).

0 000 540

TABELLE 2: Herstellung der Mischungen Ia — XIIIa

| | Harz | Harztemp. °C bei Zumischg. von $P_{rot}$ | weitere Zusätze, % von Summe Harz + $P_{rot}$ | Harztemp. bei Zugabe der Zusatze, °C | Gemischtemp. bei Ausgießen aus dem Herstellungsgefäß, °C | |
|---|---|---|---|---|---|---|
| I a | A | — | Diepoxid *), 15 | 180 | 230 | Vergleichs- |
| II a | A | — | Triäthylphosphat, 3,5 | 150 | 245 | |
| III a | A | — | ZnO, 1,3 | 50 | 230 | versuche |
| IV a | A | 150 | — | — | 180 | |
| V a | A | 150 | Diepoxid *), 7 /ZnCO$_3$, 0,5 | 180 | 250 | |
| VI a | A | 150 | Borsäure, 1,1 | 180 | 250 | |
| VII a | A | 150 | CaO, 1,3 | 50 | 250 | |
| VIII a | B | 165 | FeCO$_3$, 2 | 180 | 250 | |
| IX a | C | 140 | Diepoxid *), 3,5 | 170 | 230 | |
| X a | C | 140 | H$_3$PO$_4$, 0,5 | 150 | 235 | |
| XI a | D | 165 | Diepoxid *), 2,4 | 175 | 250 | |
| XII a | E | 170 | Diepoxid *), 4 | 190 | 240 | |
| XIII a | F | 150 | Toluylendiisocyanat, 3 | 180 | 200 | |

*) Diglycidyläther von 2,2-Bis-(4-hydroxyphenyl)-propan (Bisphenol A).

**0 000 540**

### Beispiele 1—21

Die Einarbeitung der Mischungen I—XIII in Polyamid-6,6, das eine relative Lösungsviskosität, gemessen an einer 1 %igen Lösung in m-Kresol bei 25°C, von 3,03 aufwies, gegebenenfalls mit Pigmenten und Hilfsstoffen, erfolgt in einem Einwellenextruder der Firma Reifenhäuser mit einem Schneckendurchmesser D von 30 mm und einer Schneckenlänge von 20 D. Die Zusammensetzungen, die Einarbeitungsbedingungen und das Brandverhalten der Mischungen sind aus Tabelle 3 ersichtlich.

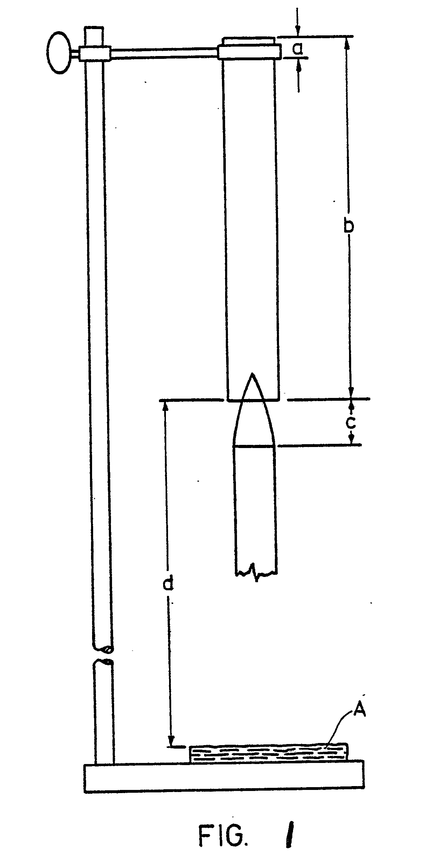

Zur Prüfung des Brandverhaltens der Formmassen nach UL, Subj. 94, werden ASTM-Prüfstäbe der Abmessungen ca. 1,5, 12,5, 127,5 und 3, 12,5, 127,5 mm gespritzt. Die Prüfung erfolgt nach den nachstehenden Bedingungen und gemäß Fig. 1.

In Fig. 1 bedeuten die Abstände folgendes:

a = 6,35 mm
b = 127 mm
c = 9,5 mm
d = 305 mm

Vertikal-Brandversuch für Brennbarkeitsklassen 94 V—0, 94 V—1, 94 V—2, s. Fig. 1.

| Prufkriterien | Brennbarkeitsklasse | | |
|---|---|---|---|
| | 94 V—0 | 94 V—1 | 94 V—2*) |
| Brenndauer nach jeder Beflammung | 10 s | 39 s | 30 s |
| Gesamtbrenndauer je Probekörpersatz (10 Beflammungen) | 50 s | 250 s | 250 s |
| Gluh- oder Flammenabbrand bis zur Halteklammer | nein | nein | nein |
| Gluhdauer nach der. 2. Beflammung | 30 s | 60 s | 60 s |
| Entzündung der Wattelage**) durch brennend-abtropfende Teile | nein | nein | nein |

*) Im Horizontal-Brandversuch erlischt die Flamme vor der 2. Meßmarke.

**) A mit Abmessungen ca. 50 × 50 × 6,5 mm.

TABELLE 3: Zusammensetzung der brandgeschützten Polyamid-6,6-Formmassen.

| Beispiel | Konzentrat / aus Gew.–% | weitere Zusätze Gew.–% | Masse-temp. °C | Gew.–% $P_{rot}$ i.D. Formm. | Gew.–% Phenolh. i.d. Formm. | Brandverhalten nach UL, Subj. 94 Prüfstabdicke | | Farbe |
|---|---|---|---|---|---|---|---|---|
| | | | | | | 1,5 mm | 3 mm | |
| 1 +) | — | — | — | — | — | V 2 | V 2 | farblos |
| 2 +) | A / 10 | — | 275 | — | 10 | brennt ab | brennt ab | beige |
| 3 +) | $P_{rot}$ als Konzentrat in PA–6,6 (einpolym.) | — | 275 | 2 | — | brennt ab | brennt ab | rot |
| 4 +) | | — | 275 | 6 | — | brennt ab | brennt ab | rot |
| 5 +) | $P_{rot}$ umhüllt n. Beisp. 3 v. DAS 2 625 691 /3 | — | 275 | 2 | 1 | brennt ab | brennt ab | rot |
| 6 +) | /9 | — | 275 | 6 | 3 | V 1 | V 1 | rot |
| 7 +) | I / 10 | — | 275 | — | 10 | brennt ab | brennt ab | beige |
| 8 +) | II / 10 | — | 275 | — | 10 | brennt ab | brennt ab | beige |
| 9 +) | III / 10 | — | 275 | — | 10 | brennt ab | brennt ab | beige |
| 10 | IV / 6 | — | 275 | 2 | 4 | V 1 | V 1 | rot |
| 11 | V / 6 | — | 275 | 2 | 4 | V 1 | V 0 | rot |
| 12 | V / 8 | — | 275 | 2,66 | 5,34 | V 0 | V 0 | rot |
| 13 | V / 6 | A / 2 | 275 | 2 | 6 | V 0 | V 0 | rot |
| 14 | VI / 6 | — | 275 | 2 | 4 | V 1 | V 0 | rot |
| 15 | VII / 6 | — | 275 | 2 | 4 | V 1 | V 1 | rot |
| 16 | VIII / 6 | — | 275 | 2 | 4 | V 0 | V 0 | rot |

TABELLE 3: Zusammensetzung der brandgeschutzten Polyamid-6,6-Formmassen (Fortsetzung)

| Beispiel | Konzentrat / aus Gew.–% | weitere Zusätze Gew.–% | Masse- temp. °C | Gew.–% $P_{rot}$ i.D. Formm. | Gew.–% Phenolh. i.d. Formm. | Brandverhalten nach UL, Subj. 94 Prüfstabdicke 1,5 mm | 3 mm | Farbe |
|---|---|---|---|---|---|---|---|---|
| 17 | IX / 6 | $TiO_2$/6 | 280 | 2 | 4 | V 1 | V 0 | hellrosa |
| 18 | X / 6 | $TiO_2$/6 | 280 | 2 | 4 | V 0 | V 0 | hellrosa |
| 19 | XI / 6 | $TiO_2$/6 | 280 | 2 | 4 | V 0 | V 0 | hellrosa |
| 20 | XII / 6 | $TiO_2$/6 | 280 | 2 | 4 | V 1 | V 0 | hellrosa |
| 21 | XIII / 6 | ZnS / 10 | 280 | 2 | 4 | V 1 | V 1 | hellrosa |

+) Vergleichsbeispiele.

0 000 540

**0 000 540**

Beispiele 22—25

Wie in den vorausstehenden Beispielen angegeben, wurden verschiedene Polyamide mit dem Konzentrat V flammfest ausgerüstet. Die Zusammensetzung der Mischungen und die Ergebnisse des Brandtests sind in Tabelle 4 zusammengestellt.

TABELLE 4: Zusammensetzung der brandgeschutzten Polyamid-Formmassen.

| Beispiel | Polyamid-Kompon- / Gew.–% i.d. Formm. | Konzentrat aus Vers. Nr / Gew. % i. der Formmasse | Weitere Zusätze / Gew.–% | Masse-temp. °C | Gew.–% $P_{rot}$ i.d. Formm. | Gew.–% Phenol-harz. i.d. Formm. | Brandverhalten n. UL, Subj. 94 Prüfstabdicke 1,5 mm | 3 mm | Farbe |
|---|---|---|---|---|---|---|---|---|---|
| 22 | PA–6, $\eta$ rel = 3,07 / 92 | V/8 | — | 260 | 2,66 | 5,34 | V 1 | V 0 | rot |
| 23 | PA–6,6 $\eta$ rel = 3,96 / 88 | V/6 | $TiO_2$/6 | 285 | 2 | 4 | V 0 | V 0 | hellrosa |
| 24 | PA aus Isophthalsaure + Hexamethylenediamin, $\eta$ rel % 2,64 / 92 | V/8 | — | 265 | 2,66 | 5,34 | V 0 | V 0 | rot |
| 25 | Gemisch aus je 50 % V/8 PA–6, $\eta$ rel = 3,07 u. PA–6,6 $\eta$ rel = 3,03 / 86 | V/8 | $TiO_2$/6 | 275 | 2,66 | 5,34 | V 1 | V 0 | hellrosa |

0 000 540

**0 000 540**

Beispiele 26—41

Die Einarbeitung der Mischungen Ia—XIIIa in Polyamid-6,6, das mit 35 Gew-% Glasfasern verstärkt ist und eine relative Viskosität, gemessen an einer 1 %igen Lösung in m-Kresol bei 25°C, von 3,07 aufweist, gegebenenfalls gemeinsam mit Füllstoffen, Pigmenten und Hilfsstoffen, erfolgte in einem Einwellenextruder der Firma Reifenhäuser mit einem Schneckendurchmesser D von 30 mm und einer Schneckenlänge von 20 D. Die Zusammensetzungen, die Einarbeitungsbedingungen und das Brandverhalten der Mischungen sind aus Tabelle 5 ersichtlich.

Zur Prüfung des Brandverhaltens der Formmassen nach UL, Subj. 94, wurden ASTM-Prüfstäbe der Abmessungen ca. 1,5, 12,5, 127,5 und 3, 12,5, 127.5 mm gespritzt.

TABELLE 5: Zusammensetzung der brandgeschutzten Polyamid-Formmassen.

| Beispiel | | Konzentrat aus Gew.–Tle. | weitere Zusätze Gew.–Tle. | Masse-temp. °C | Gew. % $P_{rot}$ i.d. formm. | Brandverhalten nach UL, Subj. 94 Prüfatabdicke | | Farbe der Prüfstäbe |
|---|---|---|---|---|---|---|---|---|
| | | | | | | 1,5 mm | 3 mm | |
| 26 | | A / 15 | — | 285 | — | brennt ab | brennt ab | beige |
| 27 | Vergleichs- | I a / 15 | — | 285 | — | brennt ab | brennt ab | beige |
| 28 | beispiele | II a / 15 | — | 285 | — | brennt ab | brennt ab | beige |
| 29 | | III a / 15 | — | 285 | — | brennt ab | brennt ab | beige |
| 30 | | IV a / 12 | $TiO_2$/6 | 285 | 2,27 | V 1 | V 1 | hellrot |
| 31 | | IV a / 10 | $TiO_2$/5 | 285 | 1,9 | brennt ab | V 1 | hellrot |
| 32 | | V a / 12 | $TiO_2$/6 | 285 | 2,1 | V 0 | V 0 | hellrot |
| 33 | | VI a / 12 | $TiO_2$/6 | 285 | 2,25 | V 1 | V 0 | hellrot |
| 34 | | VII a / 12 | $TiO_2$/6 | 285 | 2,23 | V 1 | V 0 | hellrot |
| 35 | | VIII a / 12 | $TiO_2$/6 | 285 | 2,21 | V 0 | V 0 | hellrot |
| 36 | | IX a / 12 | $TiO_2$/6 | 285 | 2,19 | V 1 | V 1 | hellrot |
| 37 | | X a / 12 | $TiO_2$/6 | 285 | 2,24 | V 1 | V 1 | hellrot |
| 38 | | XI a / 12 | $TiO_2$/6 | 285 | 2,21 | V 1 | V 0 | hellrot |
| 39 | | XII a / 12 | $TiO_2$/6 | 285 | 2,18 | V 0 | V 0 | hellrot |
| 40 | | XIII a / 12 | $TiO_2$/6 | 285 | 2,2 | V 1 | V 1 | hellrot |
| 41 | | V a / 14 | ZnS /12 | 290 | 2,28 | V 0 | V 0 | hellrot |

**0 000 540**

Beispiele 42—46

Wie in den voranstehenden Beispielen angegeben, werden verschiedene Polyamide mit dem Konzentrat Va flammfest ausgerüstet. Die Zusammensetzung der Polyamide und die Ergebnisse des Brandtests sind in Tabelle 6 zusammengestellt.

TABELLE 6

| Vers.-Nr. | Polyamid-Komponente | Gew.—Tle. i.d. Formm. | Konzentrat aus Vers./Nr. | Gew.—Tle. | weitere Zusätze Gew.—Tle. | Masse-temp. °C | Gew.—% $P_{rot}$ i.d. Formm. | Brandverhalten nach UL, Subj. 94 Prüfstabdicke 1,5 mm | 3 mm | Farbe der Prüfstabe |
|---|---|---|---|---|---|---|---|---|---|---|
| 42 | PA—6,6, $\eta$ rel = 3,03 | / 58 | V a | / 12 | Wollastonit / 30 | 285 | 2.23 | V 0 | V 0 | rot |
| 43 | PA aus Isophthal-säure u. Hexa-methylendiamin, $\eta$ rel = 2,64 | / 63 | V a | / 12 | Asbestmehl / 25 | 280 | 2,23 | V 0 | V 0 | rot |
| 44 | PA—6 mit 35 Gew.% Glasfasern, $\eta$ rel = 2,98 | / 86 | V a | / 14 | $TiO_2$/ 6 | 270 | 2,45 | V 1 | V 0 | hellrot |
| 45 | Gemisch aus je 50 Gew.—% der PA (glasfaserverstärkt) von Ver.—Nr. 1 + 19 | / 86 | V a | / 14 | $TiO_2$ / 6 | 280 | 2,45 | V 0 | V 0 | hellrot |
| 46 | PA—66, mit 35 Gew.% Glasfasern 95 wie bei Versuch Nr. 1 | | — | | $P_{rot}$ / 5 | 275 | 5 | brennt ab | V 1 | rot |

0 000 540

## 0 000 540

### Patentansprüche

1. Polyamidformmassen, die 0,5—25 Gew.-%, bezogen ant die gesamte Formmasse, einer flammwidrigmachenden Mischung aus rotem Phosphor einer mittleren Teilchengröße <200 μm und Phenol-Aldehyd-Harzen sowie gegebenenfalls Verstärkungs- und/oder Füllstoffe enthalten, dadurch gekennzeichnet, daß sie eine Mischung aus

a) 55—95 Gew.-% Phenol-Aldehydharzen und
b) 5—45 Gew.-% rotem Phosphor enthalten.

2. Polyamidformmassen nach Anspruch 1, dadurch gekennzeichnet, daß sie 3—12 Gew.-% der Mischung enthalten.

3. Polyamidformmassen nach den Ansprüchen 1—2, dadurch gekennzeichnet, daß die Mischung aus 60—80 Gew.-% der Komponente a) und 20—40 Gew.-% der Komponente b) besteht.

4. Polyamidformmassen nach den Ansprüchen 1—3, dadurch gekennzeichnet, daß sie 10—40 Gew.-%, bezogen auf die gesamte Formmasse, Verstärkungs- und/oder Füllstoffe enthalten.

5. Polyamidformmassen nach den Ansprüchen 1—4, dadurch gekennzeichnet, daß sie als Phenol-Aldehyd-harze Novolake enthalten.

6. Polyamidformmassen nach den Ansprüchen 1—5, dadurch gekennzeichnet, daß die Phenol-Aldehyd-Kondensationsharze bis zu 25 Gew.-% Vernetzungsmittel enthalten.

7. Polyamidformmassen nach den Ansprüchen 1—5, dadurch gekennzeichnet, daß den Phenol-Aldehyd-Kondensationsharzen bis zu 15 Gew.-% Metallverbindungen zugesetzt werden.

8. Polyamidformmassen nach Anspruch 4, dadurch gekennzeichnet, daß sie als Verstärkungsstoffe Glasfasern enthalten.

9. Helle Polyamidformmassen nach den Ansprüchen 1—8, dadurch gekennzeichnet, daß sie das 2—10-fache der Phosphormenge an Weißpigmenten enthalten.

### Revendications

1. Matières à mouler en polyamide, qui contiennent 0,5 à 25% en poids, par rapport à la matière à mouler totale, d'un mélange conférant l'ininflammabilité de phosphore rouge en particules de grosseur moyenne inférieure à 200 μm et de résines phénol-aldéhyde ainsi que, le cas échéant, des matières de renforcement et/ou des charges, caractérisées en ce qu'elles contiennent un mélange de:

a) 55 à 95% en poids de résines phénol-aldéhyde
b) 5 à 45% en poids de phosphore rouge.

2. Matières à mouler en polyamide suivant la revendication 1, caractérisées en ce qu'elles contiennent 3 à 12% en poids du mélange.

3. Matières à mouler en polyamide suivant lès revendications 1 et 2, caractérisées en ce que le mélange est formé de 60 à 80% en poids du composant a) et de 20 à 40% en poids du composant b).

4. Matières à mouler en polyamide suivant les revendications 1 à 3, caractérisées en ce qu'elles contiennent 10 à 40% en poids, par rapport à la matière à mouler totale, de matières de renforcement et/ou de charges.

5. Matières à mouler en polyamide suivant les revendications 1 à 4, caractérisées en ce qu'elles contiennent des novolaques comme résines phénol-aldéhyde.

6. Matières à mouler en polyamide suivant les revendications 1 à 5, caractérisées en ce que les résines de condensation phénol-aldéhyde contiennent jusqu'à 25% en poids d'agent de réticulation.

7. matières à mouler en polyamide suivant les revendications 1 à 5, caractérisées en ce que des composés métalliques sont ajoutés aux résines de condensation phénol-aldéhyde en proportion allant jusqu'à 15% en poids.

8. Matières à mouler en polyamide suivant la revendication 4, caractérisées en ce qu'elles contiennent des fibres de verre comme matières de renforcement.

9. Matières à mouler claires en polyamide suivant les revendications 1 à 8, caractérisées en ce qu'elles contiennent deux à dix fois la quantité de phosphore, de pigments blancs.

### Claims

1. Polyamide moulding compositions which contain 0.5 to 25% by weight, relative to the total moulding composition, of a flameproofing mixture of red phosphorus having an average particle size of less than 200 μ and phenol/aldehyde resins and which also optionally contain reinforcing materials and/or fillers, characterised in that they contain a mixture of

a) 55 to 95% by weight of phenol/aldehyde resins and
b) 5 to 45% by weight of red phosphorus.

**0 000 540**

2. Polyamide moulding compositions according to claim 1, characterised in that they contain 3 to 12% of the mixture.

3. Polyamide moulding compositions according to claims 1 and 2, characterised in that the mixture consists of 60 to 80% by weight of the component a) and 20 to 40% by weight of the component b).

4. Polyamide moulding compositions according to claims 1 to 3, characterised in that they contain 10 to 40% by weight, relative to the total moulding composition, of reinforcing materials and/or fillers.

5. Polyamide moulding compositions according to claims 1 to 4, characterised in that the phenol/aldehyde resins which they contain are novolaks.

6. Polyamide moulding compositions according to claims 1 to 5, characterised in that the phenol/aldehyde condensation resins contain up to 25% by weight of cross-linking agents.

7. Polyamide moulding compositions according to claims 1 to 5, characterised in that up to 15% by weight of metal compounds are added to the phenol/aldehyde condensation resins.

8. Polyamide moulding compositions according to claim 4, characterised in that the reinforcing materials which they contain are glass fibres.

9. Light coloured polyamide moulding compositions according to claims 1 to 8, characterised in that they contain white pigments in quantities of 2 to 10 times the quantity of the phosphorus.

0 000 540

FIG. 1